# EUROPÄISCHE PATENTSCHRIFT

(11) **EP 1 675 764 B1**
(45) Veröffentlichungstag und Bekanntmachung des Hinweises auf die Patenterteilung: **17.12.2008**
(21) Anmeldenummer: 03772211.3
(22) Anmeldetag: 14.10.2003
(51) Int. Cl.: B62D 11/14, B60K 5/04, B60K 17/08

(54) **ANTRIEBSANLAGE FÜR EIN KETTENFAHRZEUG**
DRIVE SYSTEM FOR A TRACKED VEHICLE
SYSTÈME D'ENTRAINEMENT POUR VÉHICULE CHENILLE

(43) Veröffentlichungstag der Anmeldung: 05.07.2006
(73) Patentinhaber: Renk Aktiengesellschaft, 86159 Augsburg (DE)
(72) Erfinder: WITZENBERGER, Max, 86447 Aindling (DE); DÖBEREINER, Rolf, 86153 Augsburg (DE)
(74) Vertreter: Schlotter, Alexander Carolus Paul
(86) Internationale Anmeldenummer: PCT/EP2003/011373
(87) Internationale Veröffentlichungsnummer: WO 2005/047087

(56) Entgegenhaltungen:
- DE-A- 3 728 171
- DE-A- 4 002 791
- DE-B- 1 124 830
- US-A- 4 890 508

## Beschreibung

Die Erfindung betrifft eine Antriebsanlage für ein Kettenfahrzeug gemäß dem Patentanspruch 1.

Es ist allgemein bekannt, dass bei Kettenfahrzeugen, neben einem Antriebsmotor ein Getriebe vorgesehen ist, welches zusätzlich auch die Lenk-Funktion des Fahrzeuges übernimmt, indem es die beiden Antriebsketten unterschiedlich schnell antreibt. Zusätzlich sind am Getriebe in der Regel mehrere schaltbare Gangstufen für Vorwärts- und Rückwärtsfahrt, Bremsen sowie Sekundärantriebe für Lüfter, Klimaanlage etc. vorgesehen.
Das Getriebe und der Motor können in einer sogenannten L-Konfiguration zueinander angeordnet sein, d.h. der antreibende Motor ist längs im Fahrzeug eingebaut und liegt damit quer zur Antriebsachse bzw. zum Getriebe, welches sich von einer Antriebsseite zur anderen erstreckt also quer zur Fahrtrichtung im Fahrzeug eingebaut ist. Der Motor kann dabei in Fahrtrichtung links oder rechts angeordnet sein und treibt beispielsweise über einen Kegelradsatz in das Getriebe ein. Bei einem Frontantrieb befindet sich der Motor bei der L-Konfiguration normalerweise hinter dem Getriebe und bei Heckantrieb vor dem Getriebe, jeweils in Fahrtrichtung betrachtet. Der Motor kann aber auch etwa in der Fahrzeugmitte längs eingebaut werden, wobei von eine T-Konfiguration gesprochen wird.
In der sogenannten U-Konfiguration ist der Antriebsmotor parallel zum Getriebe bzw. zur Antriebsachse ebenfalls quer zur Fahrtrichtung angeordnet. Der Motor kann beispielsweise über einen Stirnradzug als Transfergetriebe mit dem Getriebe verbunden sein. Bei einem frontgetriebenen Fahrzeug liegt der Motor - in Fahrtrichtung gesehen - hinter dem Getriebe und bei einem Fahrzeug mit Heckantrieb vor dem Getriebe.
Diese Antriebsanordnungen benötigen jedoch sehr viel Bauraum schränken den nutzbaren Raum in einem Fahrzeug sehr stark ein.
Aus der polnischen Fachzeitschrift "Nowa Technika Wojskowa", Ausgabe 9/98 Seite 22 ist eine kompakte Antriebsanordnung für einen ukrainischen T-72 Panzer bekannt. Dargestellt ist ein Heckantrieb, bei welchem der Antriebsmotor quer zwischen den Antriebskettenrädern im Fahrzeug angeordnet ist. Der Motor treibt beidseitig jeweils in ein Schaltgetriebe ein. An beiden Seiten des Motors ist dafür ein identisches Getriebe angeordnet, welche in 5 Vorwärts- und 3 Rückwärtsgänge geschaltet werden können. Die Differenzgeschwindigkeit an den beiden Antriebsseiten zum Lenken des Fahrzeuges kann nur durch Schalten unterschiedlicher Gänge am linken und rechten Getriebe erzeugt werden. Das Fahren von Kurven mit einem solchen Fahrzeug erfordert vom Fahrer ein großes Geschick, da der Lenkradius nicht stufenlos einstellbar ist, sondern von den Gangabstufungen abhängig ist. Wenn die - beispielsweise durch die Fahrbahn vorgegebene - Kurve nicht einem schaltbaren Lenkradius entspricht, muss der Fahrer durch schnelles Umschalten der Gangstufen den zu fahrenden Lenkradius ruckweise einstellen.
Dadurch lässt sich ein derartiges Fahrzeug nur sehr unpräzise lenken, woraus sich ein Sicherheitsrisiko und Gefahrenpotential für andere Verkehrsteilnehmer ergibt. Deshalb werden solche Fahrzeuge in manchen Ländern nicht für den öffentlichen Straßenverkehr zugelassen.
Aus der DE 37 28 171, welche den nächsten Stand der Technik darstellt, ist eine elektro-mechanische Antriebsanlage für Vollket-tenfahrzeuge bekannt. Im einfachsten Fall besteht dieses Antriebssystem aus einem elektrischen Fahrmotor, der beide Fahrzeug-Seiten über eine Zentralwelle in die gleiche Richtung antreibt und einem elektrischen Lenkmotor, der eine Nullwelle antreibt, deren Drehzahl auf die eine Seite positiv und auf die andere Seite negativ wirkt. Lenkdifferentiale links und rechts addieren die Drehzahlen der beiden Motoren und übertragen die summierte Leistung auf die Kettenräder. Zur Erzeugung der elektrischen Antriebs- und Lenkleistung ist ein von einem Verbrennungsmotor angetriebener Generator vorgesehen. Der Verbrennungsmotor und der Generator können längs oder quer im Fahrzeug angeordnet werden. Der Fahr-und/oder Lenkmotor können direkt auf der Antriebswelle angeordnet werden oder daneben, wobei sie über Kegelradtriebe mit den Fahr- bzw. Lenkantrieb eintreiben.

Die Aufgabe der Erfindung ist es, ein Fahrzeug mit einer kompakten Antriebsanordnung darzustellen, das präzise und sicher gelenkt werden kann.

Diese Aufgabe wird erfindungsgemäß durch die Merkmale des Patentanspruchs 1 gelöst.

Die erfindungsgemäße Antriebsanlage stellt eine vorteilhaft kompakte Anordnung dar, die einen sicheren Antrieb und präzises Lenken eines Fahrzeuges ermöglicht.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: eine erste beispielhafte Ausführungsform der erfindungsgemäßen Antriebsanlage und die
- Fig. 2: eine weitere erfindungsgemäße Antriebsanlage.

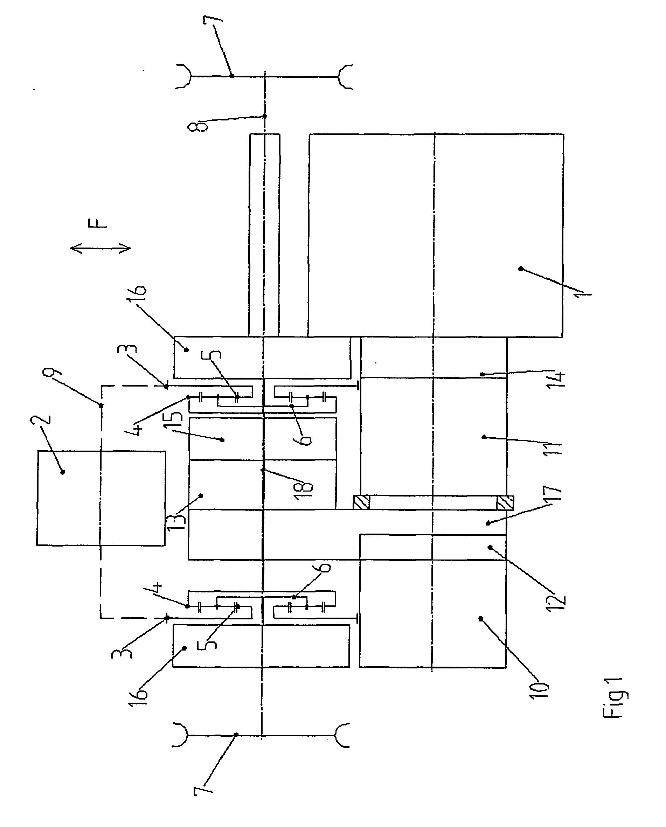

Aus der Fig. 1 ist eine Antriebsachse 8 eines Kettenfahrzeuges dargestellt, auf der beidseitig jeweils ein Kettenantriebsrad 7 zum Antrieb einer Fahrkette angeordnet ist. Zur Erzeugung der Antriebsleistung ist ein Verbrennungsmotor 1 vorgesehen, der parallel zur Antriebsachse 8 angeordnet ist. Die parallele Ausrichtung des Verbrennungsmotors 1 ist auf seine Hauptachse bezogen, womit gemeint ist, dass die Achse seiner Kurbelwelle parallel zur Antriebsachse 8 ausgerichtet ist. Der Verbrennungsmotor 1 treibt ein Schaltgetriebe 10 an, welches - in Fahrtrichtung F gesehen - seitlich neben dem Verbrennungsmotor 1 angeordnet ist. Das Schaltgetriebe 10 lässt sich mindestens in zwei verschiedene Gangstufen schalten und die Antriebsleistung kann über ein Transfergetriebe 17 auf eine Differentialgetriebeanordnung 3 übertragen werden, welche auf der Antriebsachse 8 angeordnet ist.
Vorzugsweise wird für jede Antriebsseite eine Differentialgetriebeanordnung 3 vorgesehen und über ein Fahrantriebselement, beispielsweise einem Hohlrad 4, angetrieben. Die Hohlräder 4 der beiden Antriebsseiten können über eine Welle 18 miteinander verbunden sein. Bei den dargestellten beispielhaften Differentialgetriebeanordnungen 3 wird über den Planetenradträger 6 als Antriebsausgang abgetrieben. An den Antriebsausgängen 6 sind beidseitig Bremsen 16 vorgesehen und über Abtriebswellen sind die Antriebsausgänge 6 mit den Kettenantriebsrädern 7 verbunden.
Zum Kurvenfahren ist ein Lenkantrieb 2 vorgesehen, der über eine sogenannte Nullwelle als Lenkantriebsverbindung 9 Antriebsleistung von einer zur anderen Antriebsseite überträgt. Der Lenkantrieb 2 ist vorzugsweise als Elektromotor mit mehreren voneinander unabhängigen Stromkreisen oder mit zwei unabhängigen Elektromotoren ausgeführt. Die Nullwelle treibt über - nicht näher bezifferte - Räderzüge die Sonnenräder 5 der Differentialgetriebeanordnungen 3 an, welche als Lenkantriebselemente 5 wirken. An einem Räderzug zum Antrieb eines Sonnenrades 5 ist ein Zahnrad mehr vorgesehen als am anderen, so dass die Sonnenräder der beiden Differentialgetriebeanordnungen 3 mit unterschiedlichen Drehrichtungen angetrieben werden. Der Fahrer kann den Lenkmotor 2 über ein Lenkorgan ansteuern und stufenlos regeln, sodass die eine Fahrkette beschleunigt und die andere verzögert wird und das Fahrzeug eine entsprechende Kurve fährt. Zum Geradeaus fahren wird die Nullwelle 9 angehalten.
In der schematischen Darstellung ist der Lenkantrieb 2 um 90 Winkelgrade verdreht in der Ebene der Antriebsachse 8 dargestellt. In der tatsächlichen Bauform ist der Lenkantrieb 2 über der Antriebsachse 8 angeordnet (siehe Fig.1b).

Zwischen dem Schaltgetriebe 10 und dem Verbrennungsmotor 1 kann ein Generator 14 zur Erzeugung von elektrischer Leistung angeordnet werden. Dieser wird vorzugsweise direkt durch die Kurbelwelle des Verbrennungsmotors 1, als sogenannter Kurbelwellengenerator, angetrieben.
Weiterhin kann zur Übertragung der Antriebsleistung vom Verbrennungsmotor 1 auf das Schaltgetriebe 10 ein hydrodynamischer Drehmomentwandler 11 vorgesehen werden, der vorzugsweise zwischen dem Generator 14 und dem Schaltgetriebe 10 angeordnet wird.
Zur Erhöhung der Schaltstufen kann mit dem ersten Schaltgetriebe 10 ein weiteres Schaltgetriebe 12 gekoppelt werden, welches seitlich neben dem ersten Schaltgetriebe 10 angeordnet ist und zusammen mit dem Verbrennungsmotor 1 und dem ersten Schaltgetriebe 10 eine Linie parallel zur Antriebsachse 8 bildet.
An dem weiteren Schaltgetriebe 12 sind mindestens zwei schaltbaren Gangstufen vorgesehen und es kann über das zwischen den Schaltgetrieben 10 und 12 angeordnete Transfergetriebe 17 entweder in ein Hohlrad 4 einer Differentialgetriebeanordnung 3 oder in ein weiteres Schaltgetriebe 13 eintreiben. Dieses dritte Schaltgetriebe 13 ist vorzugsweise auf der Antriebsachse 8 angeordnet und lässt sich ebenfalls in zwei Gangstufen schalten. Durch die Kopplung der Schaltgetriebe 10, 12 und 13 multiplizieren sich die an den einzelnen Schaltgetrieben vorgesehenen Schaltstufen und es können sich beispielsweise zwei mal zwei mal zwei also acht fahrbare Gangstufen ergeben.
Zum Rückwärtsfahren wird vorzugsweise an einem Schaltgetriebe eine Wendestufe vorgesehen.

Eine besonders vorteilhaft kompakte Antriebsanordnung ergibt sich durch das seitliche Anordnen des Verbrennungsmotors 1 neben dem Generator 14, Drehmomentwandler 11 und dem einen Schaltgetriebe 11, wobei die Elemente eine Linie bilden und parallel zur Antriebsachse 8 ausgerichtet angeordnet werden.

Zur Erhöhung der Bremsleistung kann an der Welle 18 ein Retarder 15 vorgesehen werden.

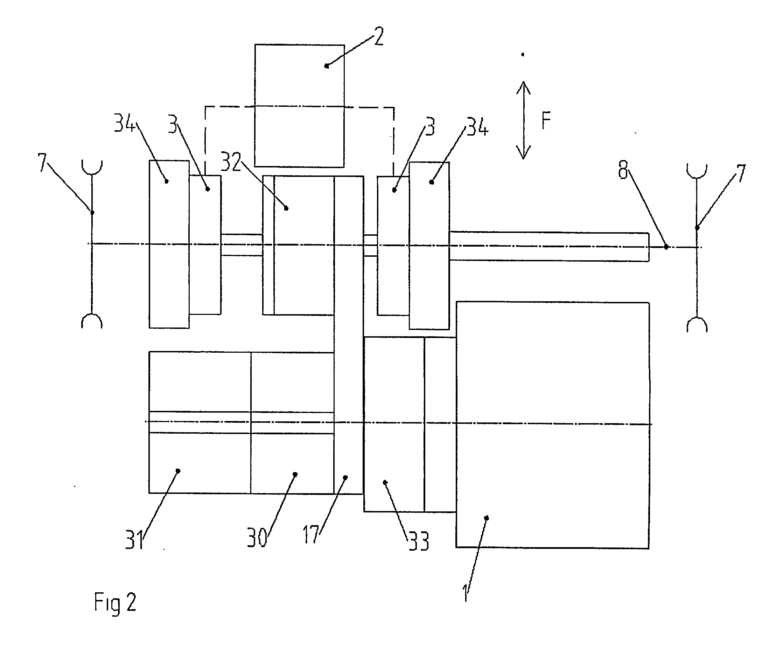

In Fig. 2 ist eine weitere Ausführung der erfindungsgemäßen Antriebsanlage dargestellt. Die Antriebsachse 8 mit den Differentialanordnungen 3, den Bremsen an den Antriebsausgängen und den Kettenantriebsrädern 7 sowie dem Lenkantrieb 2 mit Nullwelle 9 entspricht prinzipiell der Anordnung gemäß Fig. 1. Auch bei der Ausführung gemäß Fig. 2 ist zur Erzeugung der Antriebsleistung ein Verbrennungsmotor 1 vorgesehen, der parallel zur Antriebsachse 8 angeordnet ist. Der Verbrennungsmotor 1 treibt jedoch nicht in ein Schaltgetriebe ein, sondern über einen Generator 33 in einen elektrischen Fahrmotor 30. Der elektrische Fahrmotor 30 überträgt die mechanische Antriebsleistung über ein Transfergetriebe 17 entweder direkt auf ein Fahrantriebselement einer Differentialgetriebeanordnung 3 oder über ein Schaltgetriebe 32 auf eine Differentialgetriebeanordnung 3. Das Schaltgetriebe 32 lässt sich mindestens in zwei verschiedene Gangstufen schalten und ist vorzugsweise auf der Antriebsachse 8 angeordnet. Der elektrische Fahrantriebsmotor 30 kann - in Fahrtrichtung F gesehen - seitlich neben dem Verbrennungsmotor 1 angeordnet werden, wodurch sich eine besonders kompakte Antriebsanordnung ergibt.
Zur Erhöhung der Betriebssicherheit können statt eines einzelnen Fahrmotors auch zwei voneinander unabhängig betreibbare Fahrmotoren 30, 31 vorgesehen werden. Es ist jedoch auch möglich einen Fahrmotor vorzusehen, der mit mehreren unabhängigen Stromkreisen ausgestattet ist, so dass er das Fahrzeug bei Ausfall eines Kreises weiterhin antreiben kann.
Ein vorteilhaft kompakter Antrieb ergibt sich bei der Anordnung des Verbrennungsmotors 1 in einer Linie mit dem Generator 33 neben den Fahrmotoren 30, 31 die im wesentlichen in der gleichen Linie parallel zur Antriebsachse 8 liegen.

Der Kern der vorliegenden Erfindung ist darin zu sehen, dass ein Verbrennungsmotor und mindestens ein weiteres Antriebselement - gemäß Fig. 1 ein Schaltgetriebe oder gemäß Fig. 2 ein Elektrofahrmotor - nebeneinander angeordnet sind und diese eine Linie bildenden Elemente parallel zur Antriebsachse eines Fahrzeuges angeordnet werden, wodurch sich eine vorteilhaft kompakte Antriebseinheit ergibt.

Das Transfergetriebe 17 kann als schaltbares Zwei- oder Mehrgang Stirnradgetriebe ausgeführt sein.

An den Kettenantriebsrädern 7 können sogenannte Seitenvorgelege als Endantriebe mit festem Übersetzungsverhältnis vorgesehen werden und die Bremsen 16, 34 können in diese Seitenvorgelege integriert werden.
Zwischen dem Verbrennungsmotor 1 und dem Generator 14, 33 kann eine elastische Kupplung angeordnet werden, beispielsweise eine sogenannte Geislinger-Kupplung.
Eine erfindungsgemäße Antriebsanordnung kann als Front- oder Heckantrieb vorgesehen werden.

### Bezugszeichenliste

- 1: Verbrennungsmotor
- 2: Lenkantrieb
- 3: Differentialgetriebeanordnung
- 4: Fahrantriebselement; Hohlrad
- 5: Lenkantriebselement; Sonnenrad
- 6: Antriebsausgang; Planetenradträger
- 7: Kettenantriebsrad
- 8: Antriebsachse
- 9: Lenkantriebsverbindung; Nullwelle
- 10: Schaltgetriebe
- 11: Wandler
- 12: Schaltgetriebe
- 13: Schaltgetriebe
- 14: Generator
- 15: Retarder
- 16: Bremse
- 17: Transfergetriebe

- 30: Fahrmotor
- 31: Fahrmotor
- 32: Schaltgetriebe
- 33: Generator
- 34: Bremse

- F: Fahrtrichtung

## Patentansprüche

1. Antriebsanlage für ein Kettenfahrzeug mit einem Verbrennungsmotor (1), mindestens
1.1. einem Lenkantrieb (2)
1.2. einer Differentialgetriebeanordnung (3) mit mindestens einem Fahrantriebselement (4), mindestens einem Lenkantriebselement (5) sowie zwei Antriebsausgängen (6) zum Antrieb von Kettenantriebsrädern (7) einer Antriebsachse (8)
1.3. einer Lenkantriebsverbindung (9) zwischen dem Lenkantrieb (2) und einem Lenkantriebselement (5)
1.4. mindestens einem weiteren Antriebselement (10; 30) zur Übertragung von Antriebsleistung vom Verbrennungsmotor (1) auf ein Fahrantriebselement (4),
**dadurch gekennzeichnet, dass** der Verbrennungsmotor (1) parallel zur Antriebsachse (8) angeordnet ist und direkt oder indirekt Antriebsleistung auf das weitere Antriebselement (10; 30) überträgt, welches in Fahrtrichtung gesehen seitlich neben dem Verbrennungsmotor (1) angeordnet ist.

2. Antriebsanlage nach Anspruch 1, **dadurch gekennzeichnet, dass** das weitere Antriebselement zur Übertragung von Antriebsleistung ein Schaltgetriebe (10) mit mindestens zwei schaltbaren Gangstufen ist.

3. Antriebsanlage nach Anspruch 2, **dadurch gekennzeichnet, dass** zwischen dem Verbrennungsmotor (1) und dem Schaltgetriebe ein hydrodynamischer Wandler (11) angeordnet ist.

4. Antriebsanlage nach Anspruch 2, **dadurch gekennzeichnet, dass** ein weiteres Schaltgetriebe (12) mit mindestens zwei schaltbaren Gangstufen vorgesehen ist, welches seitlich neben dem ersten Schaltgetriebe (10) angeordnet ist und zusammen mit dem Verbrennungsmotor (1) und dem ersten Schaltgetriebe (10) eine Linie parallel zur Antriebsachse (8) bildet.

5. Antriebsanlage nach Anspruch 2, 3 oder 4, **dadurch gekennzeichnet, dass** noch ein weiteres Schaltgetriebe (13) mit mindestens zwei schaltbaren Gangstufen vorgesehen ist, welches auf der Antriebsachse (8) angeordnet ist.

6. Antriebsanlage nach Anspruch 1, **dadurch gekennzeichnet, dass** ein durch den Verbrennungsmotor (1) antreibbarer Generator (14; 33) zur Erzeugung elektrischer Leistung vorgesehen ist.

7. Antriebsanlage nach Anspruch 6, **dadurch gekennzeichnet, dass** der Generator (14; 33) auf der Kurbelwelle des Verbrennungsmotors (1) zwischen dem Verbrennungsmotor (1) und dem weiteren Antriebselement (10; 30) angeordnet ist.

8. Antriebsanlage nach Anspruch 1, **dadurch gekennzeichnet, dass** das weitere Antriebselement zur Übertragung von Antriebsleistung ein elektrischer Fahrmotor (30) ist.

9. Antriebsanlage nach Anspruch 5, **dadurch gekennzeichnet, dass** zwischen dem elektrischen Fahrmotor (30) und dem Fahrantriebselement (4) ein Schaltgetriebe (32) mit mindestens zwei schaltbaren Gangstufen vorgesehen ist.

10. Antriebsanlage nach Anspruch 1, **dadurch gekennzeichnet, dass** als Lenkantrieb ein elektrischer Lenkmotor (2) vorgesehen ist.

11. Antriebsanlage nach Anspruch 8, 9 oder 10, **dadurch gekennzeichnet, dass** der elektrische Fahrmotor (30) und/oder der elektrische Lenkmotor (2) mit mindestens zwei voneinander unabhängigen Stromkreisen ausgeführt sind oder zwei voneinander unabhängig betreibbare Elektromotoren als Fahrmotor (30) und/oder Lenkmotor (2) vorgesehen sind.

12. Antriebsanlage nach Anspruch 1, **dadurch gekennzeichnet, dass** an mindestens einem Fahrantriebselement ein Retarder (15) vorgesehen ist.

13. Antriebsanlage nach Anspruch 1, **dadurch gekennzeichnet, dass** an den Antriebsausgängen (6) der Differentialgetriebeanordnung (3) Bremsen (16; 34) angeordnet sind.

14. Antriebsanlage nach Anspruch 13, **dadurch gekennzeichnet, dass** an den Kettenantriebsrädern (7) Seitenvorgelege vorgesehen sind und die Bremsen in die Seitenvorgelege integriert sind.

15. Antriebsanlage nach einem der vorangehenden Ansprüche, **dadurch gekennzeichnet, dass** das weitere Antriebselement (10; 30) in seiner Hauptrichtung parallel zur Antriebsachse (8) ausgerichtet ist.

16. Antriebsanlage nach einem der vorangehenden Ansprüche, **dadurch gekennzeichnet, dass** zur Übertragung von Antriebsleistung zwischen dem Fahrmotor (30, 31) oder einem der Schaltgetriebe (10, 12) und einer Differentialgetriebeanordnung (3) ein Transfergetriebe (17) vorgesehen ist.

17. Antriebsanlage nach Anspruch 16, **dadurch gekennzeichnet, dass** das Transfergetriebe (17) mindestens zwei schaltbare Gangstufen aufweist.

## Claims

1. Drive system for a tracked vehicle with an internal combustion engine (1), at least
1.1 one steering drive (2),
1.2 a differential gear assembly (3) with at least one drive element (4), at least one steering drive element (5) as well as two drive outputs (6) for driving drive gears (7) of a drive shaft (8),
1.3 a steering drive connection (9) between the steering drive (2) and a steering drive element (5)
1.4 at least one further drive element (10; 30) for transmitting drive power of the combustion engine (1) to a drive element (4),
**characterised in that**
the combustion engine (1) is arranged parallel to the drive shaft (8) and transmits drive power directly or indirectly to the additional drive element (10; 30), which is mounted laterally next to the combustion engine (1), when viewed in driving direction.

2. Drive system according to claim 1, **characterized in that** the further drive element for transmitting drive power is a standard transmission (10) with at least two gear steps.

3. Drive system according to claim 2, **characterized in that** a hydrodynamic transducer (11) is disposed between the combustion engine (1) and the standard transmission.

4. Drive system according to claim 2, **characterized in that** a further standard transmission (12) with at least two changeable gear steps is provided, which is arranged laterally next to the first standard transmission (10) and forms a line parallel to the drive shaft (8) in combination with the combustion engine (1) and the first standard transmission (10).

5. Drive system according to claim 2, 3 or 4, **characterized in that** still another standard transmission (13) with at least two changeable gear steps is provided, which is disposed at the drive shaft (8).

6. Drive system according to claim 1, **characterized in** a generator (14; 33) propelable of the combustion engine (1) is provided for electric power generation.

7. Drive system according to claim 6, **characterized in that** the generator (14; 33) is disposed on the crankshaft of the combustion engine (1) between the combustion engine (1) and the further drive element (10; 30).

8. Drive system according to claim 1, **characterized in that** the further drive element for transmitting drive power is an electric drive motor (30).

9. Drive system according to claim 5, **characterized in that** between the electric drive motor (30) and the drive element (4) a standard transmission (32) is provided with at least two changeable gear steps.

10. Drive system according to claim 1, **characterized in that** an electric steering engine (2) is provided as steering drive.

11. Drive system according to claim 8, 9 or 10, **characterized in that** the electric drive motor (30) and/ or the electric steering engine (2) are constructed with at least two mutually independent electric circuits or that two mutually independently operateable electric drives are provided as drive motor (30) and/ or steering engine (2).

12. Drive system according to claim 1, **characterized in that** at least at one drive element a retarder (15) is provided.

13. Drive system according to claim 1, **characterized in that** brakes (16; 34) are disposed at the drive outputs (6) of the differential gear assembly (3).

14. Drive system according to claim 13, **characterized in that** at the chain drive wheels (7) lateral intermediate gears are provided and the brakes are integrated into the lateral intermediate gears.

15. Drive system according to one of the preceding claims, **characterized in that** the further drive element (10; 30) is aligned in its main direction parallel to the drive shaft (8).

16. Drive system according to one of the preceding claims, **characterized in that** for transmitting drive power between the drive motor (30, 31) or one of the standard transmissions (10,12) and a differential gear assembly (3) a transfer transmission (17) is provided.

17. Drive system according to claim 16, **characterized in that** the transfer transmission (17) comprises at least two changeable gear steps.

## Revendications

1. Système d'entraînement pour un véhicule chenillé avec un moteur à combustion interne (1), comprenant au moins
1.1 un entraînement de direction (2),
1.2 un agencement d'engrenage différentiel (3) avec au moins un élément d'entraînement de conduite (4), au moins un élément d'entraînement de direction (5) ainsi que deux sorties d'entraînement (6) pour entraîner des pignons d'entraînement de chaîne (7) d'un axe d'entraînement (8),
1.3 une connexion d'entraînement de direction (9) entre l'entraînement de direction (2) et un élément d'entraînement de direction (5),
1.4 au moins un élément d'entraînement supplémentaire (10 ; 30) pour transmettre une puissance d'entraînement du moteur à combustion interne (1) à un élément d'entraînement de conduite (4),
**caractérisé en ce que** le moteur à combustion interne (1) est disposé en parallèle à l'axe d'entraînement (8) et transmet directement ou indirectement la puissance d'entraînement à l'élément d'entraînement supplémentaire (10; 30), qui est disposé latéralement, vu dans le sens de la marche, à côté du moteur à combustion interne (1).

2. Système d'entraînement selon la revendication 1, **caractérisé en ce que** l'élément d'entraînement supplémentaire pour transmettre la puissance d'entraînement est une boîte de vitesses (10) avec au moins deux niveaux de rapport commutables.

3. Système d'entraînement selon la revendication 2, **caractérisé en ce qu'**entre le moteur à combustion interne (1) et la boîte de vitesses, un convertisseur hydrodynamique (11) est agencé.

4. Système d'entraînement selon la revendication 2, **caractérisé en ce qu'**une boîte de vitesses supplémentaire (12) avec au moins deux niveaux de rapport commutables est prévue qui est disposée latéralement à côté de la première boîte de vitesses (10) et forme en conjonction avec le moteur à combustion interne (1) et la première boîte de vitesses (10) une ligne parallèle à l'axe d'entraînement (8).

5. Système d'entraînement selon la revendication 2, 3 ou 4, **caractérisé en ce qu'**encore une boîte de vitesses supplémentaire (13) avec au moins deux niveaux de rapport commutables est prévue qui est disposée sur l'axe d'entraînement (8).

6. Système d'entraînement selon la revendication 1, **caractérisé en ce qu'**un générateur (14 ; 33) pouvant être entraîné par le moteur à combustion interne (1) est prévu pour générer une puissance électrique.

7. Système d'entraînement selon la revendication 6, **caractérisé en ce que** le générateur (14 ; 33) est disposé sur le vilebrequin du moteur à combustion interne (1) entre le moteur à combustion interne (1) et l'élément d'entraînement supplémentaire (10 ; 30).

8. Système d'entraînement selon la revendication 1, **caractérisé en ce que** l'élément d'entraînement supplémentaire pour transmettre la puissance d'entraînement est un moteur de conduite électrique (30).

9. Système d'entraînement selon la revendication 5, **caractérisé en ce qu'**entre le moteur de conduite électrique (30) et l'élément d'entraînement de conduite (4), une boîte de vitesses (32) avec au moins deux niveaux de rapport commutables est prévue.

10. Système d'entraînement selon la revendication 1, **caractérisé en ce qu'**un moteur de direction électrique (2) est prévu en tant qu'entraînement de conduite.

11. Système d'entraînement selon la revendication 8, 9 ou 10, **caractérisé en ce que** le moteur de conduite électrique (30) et/ou le moteur de direction électrique (2) sont réalisés avec au moins deux circuits électriques indépendants l'un de l'autre ou **en ce que** deux moteurs électriques pouvant être exploités indépendamment l'un de l'autre sont prévus en tant que moteur de conduite (30) et/ou moteur de direction (2).

12. Système d'entraînement selon la revendication 1, **caractérisé en ce que** sur au moins élément d'entraînement de conduite, un retardateur (15) est prévu.

13. Système d'entraînement selon la revendication 1, **caractérisé en ce qu'**aux sorties d'entraînement (6) de l'agencement d'engrenage différentiel (3) des freins (16 ; 34) sont disposés.

14. Système d'entraînement selon la revendication 13, **caractérisé en ce que** sur les pignons d'entraînement de chaîne (7) des transmissions intermédiaires latérales sont prévues et les freins sont intégrés dans les transmissions intermédiaires latérales.

15. Système d'entraînement selon l'une quelconque des revendications précédentes, **caractérisé en ce que** l'élément d'entraînement supplémentaire (10 ; 30) est orienté dans sa direction principale en parallèle à l'axe d'entraînement (8).

16. Système d'entraînement selon l'une quelconque des revendications précédentes, **caractérisé en ce que** pour la transmission de la puissance d'entraînement entre le moteur de conduite (30, 31) ou l'une des boîtes de vitesses (10, 12) et un agencement d'engrenage différentiel (3), un engrenage de transfert (17) est prévu.

17. Système d'entraînement selon la revendication 16, **caractérisé en ce que** l'engrenage de transfert (17) présente au moins deux niveaux de rapport commutables.
